# EUROPÄISCHE PATENTSCHRIFT

(11) **EP 1 140 613 B1**
(45) Veröffentlichungstag und Bekanntmachung des Hinweises auf die Patenterteilung: **02.10.2002**
(21) Anmeldenummer: 98965864.6
(22) Anmeldetag: 22.12.1998
(51) Int. Cl.: B63B 21/20, F16G 15/08

(54) **VERBINDER ZWISCHEN ANKER UND KETTE VON SCHIFFEN, INSBESONDERE SEGELBOOTEN UND JACHTEN**
CONNECTOR BETWEEN ANCHOR AND CHAIN OF SHIPS, ESPECIALLY SAILING BOATS AND YACHTS
ELEMENT DE JONCTION ENTRE L'ANCRE ET LA CHAINE DE BATEAUX, NOTAMMENT DE VOILIERS ET DE YACHTS

(43) Veröffentlichungstag der Anmeldung: 10.10.2001
(73) Patentinhaber: Simon, Werner, 42289 Wuppertal (DE)
(72) Erfinder: Simon, Werner, 42289 Wuppertal (DE)
(74) Vertreter: Ludewig, Karlheinrich, Dipl.-Ing.
(86) Internationale Anmeldenummer: EP9808398
(87) Internationale Veröffentlichungsnummer: WO00037307

(56) Entgegenhaltungen:
- DE-C- 19 726 893
- FR-A- 567 127
- GB-A- 522 044

## Beschreibung

Die Erfindung betrifft einen Verbinder zwischen Anker und Kette von Schiffen, insbesondere Segelbooten und Jachten, dessen Ankeranschlußbauteil am einen Ende eine Aufnahmegabel für den Anker und dessen Kettenanschlußbauteil an einem Ende einen Gabelteil zur Aufnahme eines Kettengliedes aufweist, wobei die Schenkel der Aufnahmegabel und auch die Schenkel des Gabelteiles von jeweils einem Schraubenbolzen durchdrungen sind, der einerseits mit seinem Kopf im einen Schenkel und mit seinem Gewindeschaft im anderen Schenkel festgelegt und mittels einer Klemmschraube bedarfsweise sicherbar ist, wobei Ankeranschlußbauteil und Kettenanschlußbauteil über ein Kugelgelenk miteinander verbunden sind, indem der eine Bauteil einen Kugelkopf und der andere Bauteil eine Kugelaufnahme mit einer in die Aufnahmegabel mündenden Öffnung aufweist.

Ein Verbinder der eingangs genannten Art ist aus der DE 197 26 893 C1 bekannt, dessen Kettenanschlußbauteil den Kugelkopf aufweist, der in einer Kugelaufnahme des Ankeranschlußbauteiles gehaltert ist. Abgesehen von dem Anschlußschaft zum Gabelteil des Kettenanschlußbauteiles ist der Kugelkopf durch eine vollständige Kugel gebildet, die abgesehen von dem Schwenkauslaß für den Verbindungsschaft zum Gabelteil vollständig von einer hohlkugeligen Aufnahme im Kettenanschlußbauteil umfaßt ist. Am Grund der Kugelaufnahme befindet sich eine Öffnung, die in den Schlitz der Aufnahmegabel des Ankeranschlußbauteiles hinausführt. Diese Öffnung soll das Abfließen von Verunreinigungen, wie beispielsweise Sand u.dgl. aus der Kugelaufnahme ermöglichen. Da jedoch der Kugelkopf im wesentlichen von der Kugelaufnahme vollständig umfaßt ist, kann es insbesondere bei längeren Liegezeiten des Ankers unter Wasser zu Verkrustungen bzw. zu Verschmutzungen kommen, wodurch die Flexibilität des Kugelgelenkes zunichte gemacht wird.

Aufgabe der Erfindung ist es, die Gelenk-Funktion eines Verbinders aufrecht zu erhalten, der einerseits infolge einer im Bezug auf die Längsachse des Ankerschaftes sich selbsttätig einstellenden Winkellage der Kette die Biegebeanspruchung des Verbinders minimiert, und der sich andererseits auf einfache Weise kostengünstig montieren läßt, wobei beim bestimmungsgemäßen Gebrauch Verunreinigungen im Kugelgelenk durch Pumpbewegungen - infolge Drehens, Gierens, Krängens od.dgl. des Schiffsrumpfes - sicher ausgespült werden. Diese Aufgabe ist erfindungsgemäß dadurch gelöst, daß die Kugelaufnahme einen von der Aufnahmegabel weggerichteten Hohlkugelabschnitt zur Halterung des Kugelkopfes bei Zugbelastung aufweist, und der Kugelkopf eine zur Aufnahmegabel hingerichtete, hinter die Kugelform zurücktretende Stirnfläche aufweist, die zusammen mit einem aus dem Hohlkugelabschnitt austretenden, zur Aufnahmegabel gerichteten Zylinderraum eine Pumpkammer bildet. Sowohl Entlastungs- als auch Belastungsbewegungen und nicht zuletzt auch Winkelbewegungen der Kette führen zu einer Pumpbewegung des Kugelkopfes, wodurch zusammen mit dem Wasser etwa in der Pumpkammer befindliche Verunreinigungen ausgespült werden, so daß die Winkelbeweglichkeit des Verbinders gewährleistet ist.

Obschon es möglich ist, den Kugelkopf dem Ankeranschlußbauteil zuzuordnen, und demgemäß die Kugelaufnahme am Kettenanschlußbauteil auszubilden, so mag es aus Gründen der Dimensionierungsfrage vorteilhaft sein, wenn der Kugelkopf Bestandteil des Kettenanschlußbauteiles und die Kugelaufnahme Bestandteil des Ankeranschlußbauteiles ist. Zur Schaffung ausreichender Kontaktflächen bei auf Zug beanspruchtem Verbinder, selbst dann, wenn der den Kugelkopf aufweisende Anschlußbauteil aus der Längsachsenflucht der Anschlußbauteile in seine maximale Neigungslage abgewinkelt ist, weist der Kugelkopf vorteilhaft auf der seinem Gabelteil gegenüberliegenden Seite eine quer zur Längsrichtung des Kettenanschlußbauteiles verlaufende, ebene Stirnfläche auf, die von einem vom Kugelmittelpunkt ausgehenden stumpfen Winkel umfaßt wird, dessen Wert 180° minus dem maximal möglichen Schwenkwinkel des Kettenanschlußbauteiles beträgt. Dabei ist die Tiefe des die Pumpkammer bildenden Zylinderraumes vorzugsweise etwas größer als der Abstand des am weitesten vorgeschwenkten Randbereiches der Stirnfläche des Kugelkopfes vom Kugelmittelpunkt aus, bei Verschwenkung des Kugelkopfes um den halben Wert des Schwenkwinkels.

Die im Normalfall ebene Stirnfläche des Kugelkopfes kann jedoch auch konkav gestaltet sein, so daß sich ein teilweise ausgehöhlter Kugelkopf ergibt.

Zur Begrenzung des Pumphubes tritt aus der Stirnfläche des Kugelkopfes vorteilhaft ein Stützzapfen aus, der bis maximal zum gedachten Kugelergänzungskreis vorragt. Dabei kann dieser Stützzapfen verschiedenartig gestaltet sein, wie beispielsweise als Kegel mit abgerundeter Spitze. Außerdem ist es auch möglich, den Stützzapfen in Form einer auf die Stirnfläche des Kugelkopfes aufgesetzten Glocke zu gestalten, oder aber den Stützzapfen als Zylinderansatz auszubilden, dessen Kuppe als Kugelkalotte gestaltet ist.

Um eine ungewollte oder unbefugte Lösung der Klemmschraube des lagegesicherten Schraubenbolzens zu vermeiden, ist nach einem weiteren Ausgestaltungsmerkmal der Erfindung diese Klemmschraube als Kopfschraube ausgebildet, deren Kopf zur Betätigung mit einem Sonderwerkzeug hergerichtet ist. Dabei mag in den Kopf der Klemmschraube eine sternförmige Polygonaufnahme eingetieft sein.

Die Erfindung ist in Ausführungsbeispielen auf der Zeichnung dargestellt und wird nachfolgend näher erläutert. Es zeigen:
- Fig. 1: die Verankerungslage eines Schiffskörpers am Gewässergrund in schematischer Darstellung, wobei die mit dem Schiffskörper verbundene Ankerkette am Anker über den Verbinder gehaltert ist,
- Fig. 2: den aus zwei Bauteilen gebildeten Verbinder in einer teilweise aufgebrochenen und im Schnitt dargestellten Seitenansicht in einer gegenüber Fig. 1 vergrößerten Darstellung, wobei Ankerschaft und Ankerkette in strichpunktierten Linien angedeutet sind,
- Fig. 3: eine Teilansicht auf die Aufnahmegabel des Ankeranschlußbauteiles in Richtung des Pfeiles III von Fig. 2,
- Fig. 4: ein Ausführungsbeispiel des den Kugelkopf aufweisenden Kettenanschlußbauteiles, das zweiteilig gestaltet ist, wobei aus der Stirnfläche des Kugelkopfes ein als Kegel mit abgerundeter Spitze gestalteter Stützzapfen ausragt,
- Fig. 5: ein weiteres Ausführungsbeispiel eines Kugelkopfes, aus dessen Stirnfläche ein Stützzapfen in Gestalt einer aufgesetzten Glocke ausragt,
- Fig. 6: ein weiteres Ausführungsbeispiel eines Kugelkopfes, dessen aus der Stirnseite ausragender Stützzapfen von einem Zylinderansatz gebildet ist.

Der Schiffs- bzw. Bootskörper 10 weist in bekannter Weise einen Ankerkasten 11 auf, aus dem die Ankerkette 12, beispielsweise über eine Haspel 13 mit Kettennuß abgewickelt und auch wieder eingezogen werden kann. Das Ende der Ankerkette 12 ist an den Anker 14 über einen Verbinder 15 angeschlossen, der zweckmäßigerweise aus Edelstahl gefertigt und derart dimensioniert ist, daß Zugkräfte in auftretender Höhe aufgenommen werden können.

Der Verbinder 15 umfaßt einen Ankeranschlußbauteil 16 für den Ankerschaft 18 und ein Kettenanschlußbauteil 17, die über ein Kugelgelenk 19 miteinander verbunden sind. An seinem dem Kugelgelenk 19 abgekehrten Ende weist der Ankeranschlußbauteil 16 einen zur Stirnseite hin offenen und *sich* in Längsrichtung des Ankeranschlußbauteiles 16 erstreckenden Schlitz 20 auf, welcher eine Aufnahmegabel 21 für den Ankerschaft 18 bildet. Die Schenkel 23 und 24 der Aufnahmegabel 21 werden von einem Schraubenbolzen 25 durchquert, dessen Schaft von dem in den Schlitz 20 reingeschobenen Ankerschaft 18 umfaßt ist. Dabei mag zwischen dem Schaft des Schraubenbolzens 25 und die Bohrung 26 des Ankerschaftes 18 eine Buchse 27 geschaltet sein. Während der Schenkel 23 der Aufnahmegabel 21 den Kopf des Schraubenbolzens 25 aufnimmt, ist der Gewindeschaft 28 des Schraubenbolzens 25 in ein Gewindeloch im Schenkel 24 der Aufnahmegabel 21 eingeschraubt.

An den Grund des Schlitzes 20 im Ankeranschlußbauteil 16 schließt sich mit etwas Abstand eine zylindrische Vertiefung 29 an, deren Abmessung weiter unten erläutert ist. Diese Vertiefung 29 ist konzentrisch von einem Gewindeansatz 30 des Ankeranschlußbauteiles 16 umfaßt. Dieser Gewindeansatz 30 dient der Halterung eines darauf mit einer Innengewindehülse 32 aufgeschraubten Überwurfringes 31, wobei die Innengewindehülse 32 einstückiger Bestandteil des Überwurfringes. 31 ist. An diese Innengewindehülse 32 schließt sich ein ringförmiger Hohlkugelabschnitt 33 an, der zusammen mit der Vertiefung 29 eine Kugelaufnahme 34 bildet. Der Durchmesser der zylindrischen Vertiefung 29 entspricht exakt dem Durchmesser des Hohlkugelabschnitts 33. An seiner der Innengewindehülse 32 gegenüberliegenden Stirnseite 35 weist der Überwurfring 31 eine als Trichter 36 ausgebildete Öffnung auf, die sich ausgehend von der Stirnseite 35 zum Kugelkalottenring 33 hin verjüngt. Der Kettenanschlußbauteil 17 des Verbinders 15 weist einen in die Kugelaufnahme 34 passenden Kugelkopf 38 auf, dessen Mittelpunkt M exakt in der Ebene des Gewindeansatzes 30 liegt, wenn der Verbinder auf Zug beansprucht wird, und der Kugelkopf 38 am Hohlkugelabschnitt 33 des Überwurfringes 31 anliegt. Der Kugelkopf 38 weist eine zur Aufnahmegabel 21 gerichtete Stirnfläche 39 auf, die gegenüber der Kugelform zurücktritt, wobei diese Stirnfläche von einem vom Kugelmittelpunkt M ausgehenden, stumpfen Winkel umfaßt wird, dessen Wert 180° minus dem maximal möglichen Schwenkwinkel a des Kettenanschlußbauteiles 17 beträgt. Aus der miteinander fluchtenden Längslage von Ankeranschlußbauteil und Kettenanschlußbauteil läßt sich der Kettenanschlußbauteil 17 gegenüber dem Ankeranschlußbauteil 16 um den halben Schwenkwinkel α auslenken und schlägt dann an der konischen Öffnung 37 des Überwurfringes 31 an. Die Stirnfläche 39 bildet zusammen mit der Vertiefung 29 eine Pumpkammer 22, wobei die Tiefe der Vertiefung 29 derart gewählt ist, daß bei um den Winkel α/2 ausgelenktem Kugelkopf der am weitesten in die Kugelaufnahme 34 vorragende Bereich der Stirnfläche 39 nicht an der unteren Begrenzung der Vertiefung anschlägt.

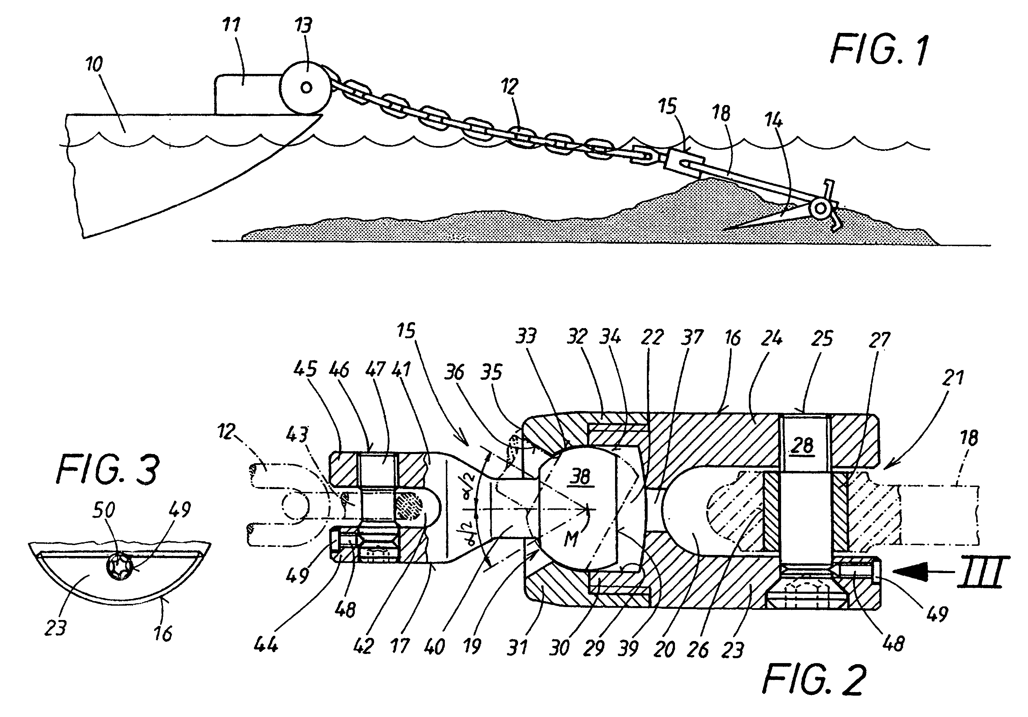

Auf der der Stirnfläche 39 gegenüberliegenden Seite weist der Kugelkopf einen Halsteil 40 mit Kreisquerschnitt auf, der bei dem aus Fig. 2 ersichtlichen Ausführungsbeispiel in einen Gabelteil 41 zur Aufnahme eines Kettengliedes einer Ankerkette 12 einstückig übergeht. Dabei ist bei diesem Ausführungsbeispiel der Durchmesser des Gabelteiles 41 nicht größer als der kleinste Durchmesser des den Hohlkugelabschnitt aufweisenden Überwurfringes 31 am Ende seines Trichters 36, um die Montage zu ermöglichen.

Der zylindrische Gabelteil 41 weist ebenfalls einen von seiner Stirnseite her mittig eindringenden Längsschlitz 42 auf, durch welchen der Gabelteil 41 am Kettenanschlußbauteil 17 gebildet ist. In diesem Längsschlitz 42 des Gabelteiles 41 wird ein Kettenglied 43 der Ankerkette 12 aufgenommen, in dem auch die Schenkel 44 und 45 des Gabelteiles 41 von einem Schraubenbolzen 46 ebenso durchdrungen sind, wie das Kettenglied 43 der Ankerkette 12. Auch bei dem Kettenanschlußbauteil 17 nimmt der eine Schenkel 44 des Gabelteiles 41 den Kopf des Schraubenbolzens 46, während der andere Schenkel 45 des Gabelteiles 41 eine Gewindebohrung zum Einschrauben des Gewindeschaftes 47 des Schraubenbolzens 46 aufweist.

Um dem Abfallen des Ankers 14 von der-Ankerkette 12 entgegenzuwirken, ist es von Bedeutung, die Schraubenbolzen 25 und 46 zu sichern. Als Sicherungsglieder dienen Klemmschrauben 48, die von in den jeweiligen Schenkel 23 bzw. 44 des Ankeranschlußbauteiles 16 bzw. des Kettenanschlußbauteiles 17 eingeschraubten Kopfschrauben gebildet sein können, die mit ihrem freien Ende des Gewindeschaftes den jeweiligen Schraubenbolzen 25 bzw. 46 festklemmen. Um außerdem zu verhindern, daß diese Klemmschrauben von Unbefugten gelöst werden können, ist der Kopf 59 jeder Klemmschraube zur Betätigung mit einem Sonderwerkzeug hergerichtet. Zu diesem Zweck mag in den Kopf 49 der Klemmschraube 48 eine sternförmige Polygonaufnahme 50 eingetieft sein.

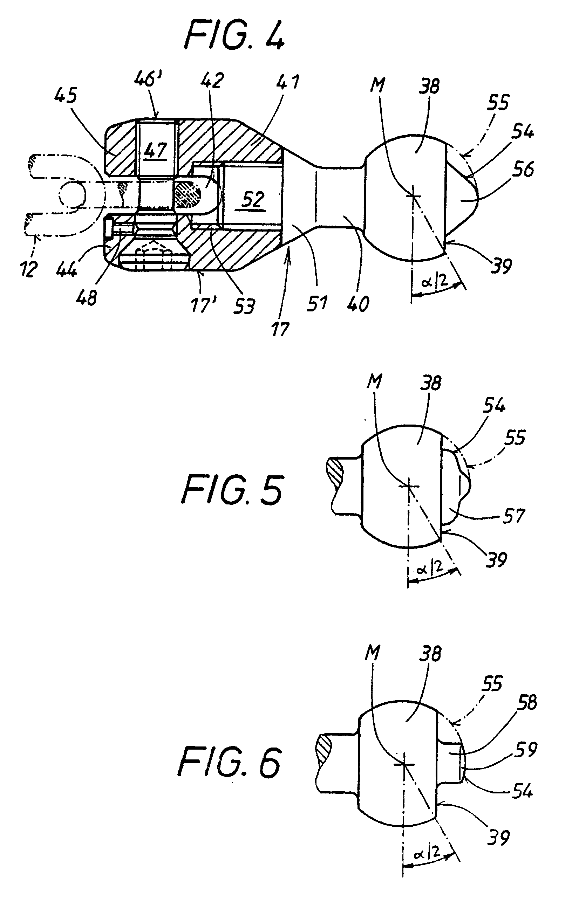

Für den Fall, daß der Querschnitt des Gabelteiles 41 den Festigkeitsanforderungen nicht genügt, kann gemäß dem aus Fig. 4 ersichtlichen Ausführungsbeispiel der Kettenanschlußbauteil 17 auch zweiteilig gestaltet sein. Dabei weist der an den Kugelkopf 38 anschließende Halsteil 40 einen Ringkragen 51 auf, aus dem ein Gewindezapfen 52 ausragt. Der Außendurchmesser des Ringkragens 51 ist dabei geringfügig kleiner als der kleinsteInnendurchmesser des Trichters 36 des Überwurfringes 31. Auf den aus dem Ringkragen 51 vorragenden Gewindezapfen 52 läßt sich dann ein Bauteilabschnitt 17' aufschrauben, der entsprechend höheren Festigkeitsanforderungen auch einen größeren Durchmesser aufweisen kann, als der aus Fig. 2 ersichtliche Kettenanschlußbauteil 17. Die Ausbildung dieses Bauteilabschnittes 17' entspricht der Ausbildung des Kettenanschlußbauteiles 17. So weist der Bauteilabschnitt 17' auch einen Längsschlitz 42 auf, wodurch der Gabelteil 41 mit seinen Schenkeln 44 und 45 gebildet ist. Auch diese Schenkel 44 und 45 werden von einem Schraubenbolzen 46' durchquert, der mit seinem Kopf im Schenkel 44 und mit seinem Gewindeschaft 47 in eine Gewindebohrung im Schenkel 45 eingeschraubt ist. Der Längsschlitz 42 ist so weit in die in Längsachse des Bauteilabschnitts 17' zentrisch eingebrachte Gewindebohrung 53 für den Gewindezapfen 52 geführt, daß beim Anziehen des Schraubenbolzens 46' eine Sicherung der Schraubverbindung zwischen dem Gewindezapfen 52 und der Gewindebohrung 53 durch Verklemmen entsteht.

Wie insbesondere aus den Fig. 4 bis 6 ersichtlich ist, mag aus der Stirnfläche 39 des Kugelkopfes 38 ein Stützzapfen 54 austreten, der bis maximal zum gedachten Kugelergänzungskreis 55 vorragt. Bei dem aus Fig. 4 ersichtlichen Ausführungsbeispiel ist der Stützzapfen 54 als Kegel 56 mit abgerundeter Spitze ausgebildet. Bei dem aus Fig. 5 ersichtlichen Ausführungsbeispiel ist der Stützzapfen 54 in Form einer auf die Stirnfläche 39 des Kugelkopfes 38 aufgesetzten Glocke 57 gestaltet. Wie bereits angedeutet, kann die Konfiguration des Stützzapfens 54 verschiedenartig sein. Beispielsweise läßt sich auch ein Stützzapfen 54 in Form des aus Fig. 6 ersichtlichen Ausführungsbeispieles bilden, indem der Stützzapfen 54 von einem Zylinderansatz 58 gebildet ist, dessen Kuppe als Kugelkalotte 59 geformt ist.

Die vorbeschriebene Verbindung des Ankeranschlußbauteiles 16 mit dem Kettenanschlußbauteil 17 durch das Kugelgelenk 19 ermöglicht eine Verdrehung dieser Bauteile 16 und 17 gegeneinander um 360°. Außerdem ist dabei noch eine überlagerte Schwenkbewegung möglich, die aus der Mittenlage in die jeweilige unter dem Winkel α/2 in strichpunktierten Linien in Fig. 2 dargestellte allseitige Endlage möglich ist.

Wie bereits erwähnt, geben die dargestellten und vorbeschriebenen Ausführungsformen den Erfindungsgegenstand nur beispielsweise wieder, der keinesfalls allein darauf beschränkt ist. Es sind vielmehr noch manche Änderungen und andere Ausgestaltungen des Erfindungsgegenstandes denkbar. Außerdem sind alle aus der Beschreibung und den Zeichnungen ersichtlichen Merkmale erfindungswesentlich, auch wenn sie nicht ausdrücklich beansprucht sind.

### Bezugszeichenliste:

- 10: Schiffs-, Bootskörper
- 11: Ankerkasten
- 12: Ankerkette
- 13: Haspel
- 14: Anker
- 15: Verbinder
- 16: Ankeranschlußbauteil
- 17: Kettenanschlußbauteil
- 17': Bauteilabschnitt
- 18: Ankerschaft
- 19: Kugelgelenk
- 20: Schlitz
- 21: Aufnahmegabel
- 22: Pumpkammer
- 23: Schenkel, von 21
- 24: Schenkel, von 21
- 25: Schraubenbolzen
- 26: Bohrung, in 18
- 27: Buchse, in 26
- 28: Gewindeschaft
- 29: Vertiefung/Zylinderraum
- 30: Gewindeansatz
- 31: Überwurfring
- 32: Innengewindehülse
- 33: Hohlkugelabschnitt
- 34: Kugelaufnahme
- 35: Stirnseite
- 36: Trichter
- 37: Öffnung
- 38: Kugelkopf
- 39: Stirnfläche
- 40: Halsteil
- 41: Gabelteil
- 42: Längsschlitz
- 43: Kettenglied
- 44: Schenkel, von 41
- 45: Schenkel, von 41
- 46: Schraubenbolzen
- 46': Schraubenbolzen
- 47: Gewindeschaft
- 48: Klemmschraube
- 49: Kopf, von 48
- 50: Polygonaufnahme
- 51: Ringkragen
- 52: Gewindezapfen
- 53: Gewindebohrung
- 54: Stützzapfen
- 55: Kugelergänzungskreis
- 56: Kegel
- 57: Glocke
- 58: Zylinderansatz
- 59: Kugelkalotte

- M: Kugelmittelpunkt
- α: Schwenkwinkel

## Patentansprüche

1. Verbinder (15) zwischen Anker (14) und Kette (12) von Schiffen, insbesondere Segelbooten und Jachten, umfassend einen Ankeranschlußbauteil (16) und einen Kettenanschlußbauteil (17), wobei der Ankeranschlußbauteil (16) am einen Ende eine Aufnahmegabel (21) für den Anker (14) und der Kettenanschlußbauteil (17) am einen Ende einen Gabelteil (41) zur Aufnahme eines Kettengliedes (43) aufweist und die Schenkel (23, 24) der Aufnahmegabel (21) und auch die Schenkel des Gabelteiles (41) von jeweils einem Schraubenbolzen (25,46) durchdrungen sind, der einerseits mit seinem Kopf in einen Schenkel (23,44) und mit seinem Gewindeschaft (28, 47) im anderen Schenkel (24, 45) festgelegt und mittels einer Klemmschraube (48) bedarfsweise sicherbar ist, wobei Ankeranschlußbauteil (16) und Kettenanschlußbauteil (17) an ihren jeweils anderen Enden miteinander verbunden sind, indem der eine Bauteil einen Kugelkopf (38) und der andere Bauteil eine Kugelaufnahme (34) mit einer in die Aufnahmegabel (21) mündenden Öffnung (37) aufweist,
**dadurch gekennzeichnet,**
**daß** die Kugelaufnahme (34) einen von der Aufnahmegabel (21) weggerichteten Hohlkugelabschnitt (33) zur Halterung des Kugelkopfes (38) bei Zugbelastung aufweist, und der Kugelkopf (38) eine zur Aufnahmegabel (21) hingerichtete, hinter die Kugelform zurücktretende Stirnfläche (39) aufweist, die zusammen mit einer aus dem Hohlkugelabschnitt (33) auftretenden, zur Aufnahmegabel (21) gerichteten zylindrischen Vertiefung (29) eine Pumpkammer (22) bildet.

2. Verbinder nach Anspruch 1, **dadurch gekennzeichnet, daß** der Kugelkopf (38) Bestandteil des Kettenanschlußbauteiles (17) und die Kugelaufnahme (34) Bestandteil des Ankeranschlußbauteiles (16) ist.

3. Verbinder nach Anspruch 1 oder 2, **dadurch gekennzeichnet, daß** der Kugelkopf (38) auf der seinem Gabelteil (41) gegenüberliegenden Seite eine quer zur Längsrichtung des Kettenanschlußbauteiles (17) verlaufende, ebene Stirnfläche (39) aufweist, die von einem vom Kugelmittelpunkt (M) ausgehenden stumpfen Winkel umfaßt wird, dessen Wert 180° minus dem maximal möglichen Schwenkwinkel (a) des Kettenanschlußbauteiles (17) beträgt.

4. Verbinder nach einem der vorhergehenden Ansprüche, **dadurch gekennzeichnet, daß** die Tiefe des die Pumpkammer (22) bildenden Zylinderraumes (29) etwas größer ist, als der Abstand des am weitesten vorgeschwenkten Randbereiches der Stirnfläche (39) des Kugelkopfes (38) vom Kugelmittelpunkt (M) aus, bei Verschwenkung des Kugelkopfes (38) um den halben Schwenkwinkel (α/2).

5. Verbinder nach einem der vorhergehenden Ansprüche, **dadurch gekennzeichnet, daß** aus der Stirnfläche (39) des Kugelkopfes (38) ein Stützzapfen (54) austritt, der bis maximal zum gedachten Kugelergänzungskreis (55) vorragt.

6. Verbinder nach Anspruch 5, **dadurch gekennzeichnet, daß** der Stützzapfen (54) als Kegel (56) mit abgerundeter Spitze ausgebildet ist.

7. Verbinder nach Anspruch 5, **dadurch gekennzeichnet, daß** der Stützzapfen (54) in Form einer auf die Stirnfläche (39) des Kugelkopfes (38) aufgesetzten Glocke (57) gestaltet ist.

8. Verbinder nach Anspruch 5, **dadurch gekennzeichnet, daß** der Stützzapfen (54) von einem Zylinderansatz (58) gebildet ist, dessen Kuppe als Kugelkalotte (59) gestaltet ist.

9. Verbinder nach einem der vorhergehenden Ansprüche, **dadurch gekennzeichnet, daß** die eine Sicherung des Schraubenbolzens (25, 46, 46') bildende Klemmschraube (48) als Kopfschraube ausgebildet ist, deren Kopf (49) zur Betätigung mit einem Sonderwerkzeug hergerichtet ist.

10. Verbinder nach Anspruch 9, **dadurch gekennzeichnet, daß** in den Kopf der Klemmschraube (48) eine sternförmige Polygonaufnahme (50) eingetieft ist.

## Claims

1. Connector (15) between anchor (14) and chain (12) of ships, in particular sailing boats and yachts, comprising an anchor connection component (16) and a chain connection component (17), wherein the anchor connection component (16) at one end has a receiving fork (21) for the anchor (14) and the chain connection component (17) at one end has a fork part (41) for receiving a chain link (43) and the limbs (23, 24) of the receiving fork (21) as well as the limbs of the fork part (41) are penetrated in each case by a screw bolt (25, 46), which is fastened at one end by its head into one limb (23, 44) and by its threaded shank (28, 47) in the other limb (24, 45) and, where necessary, is securable by means of a clamping screw (48), wherein anchor connection component (16) and chain connection component (17) in each case at their other ends are connected to one another in that the one component has a ball head (38) and the other component has a ball socket (34) with an opening (37), which opens into the receiving fork (21),
**characterized in that**
the ball socket (34) comprises a hollow spherical portion (33) directed away from the receiving fork (21) for holding the ball head (38) under tensile load, and the ball head (38) has an end face (39), which is directed towards the receiving fork (21) and truncates the spherical shape and which, together with a cylindrical recess (29) arising from the hollow spherical portion (33) and directed towards the receiving fork (21), forms a pump chamber (22).

2. Connector according to claim 1, **characterized in that** the ball head (38) is an integral part of the chain connection component (17) and the ball socket (34) is an integral part of the anchor connection component (16).

3. Connector according to claim 1 or 2, **characterized in that** the ball head (38) at the opposite end to its fork part (41) has a planar end face (39), which extends at right angles to the longitudinal direction of the chain connection component (17) and is included by an obtuse angle, of which the point of origin is the ball centre (M) and the value is 180° minus the maximum possible swivel angle (α) of the chain connection component (17).

4. Connector according to one of the preceding claims, **characterized in that** the depth of the cylindrical space (29) forming the pump chamber (22) is slightly greater than the distance of the furthest forward swivelled edge region of the end face (39) of the ball head (38) from the ball centre (M) upon swivelling of the ball head (38) through half of the swivel angle (α/2).

5. Connector according to one of the preceding claims, **characterized in that** emanating from the end face (39) of the ball head (38) is a pivot journal (54), which projects at most up to the imaginary sphere-completing circle (55).

6. Connector according to claim 5, **characterized in that** the pivot journal (54) takes the form of a cone (56) with a rounded point.

7. Connector according to claim 5, **characterized in that** the pivot journal (54) is fashioned in the shape of a bell (57) mounted onto the end face (39) of the ball head (38).

8. Connector according to claim 5, **characterized in that** the pivot journal (54) is formed by a cylindrical projection (58), the cusp of which is fashioned as a spherical cap (59).

9. Connector according to one of the preceding claims, **characterized in that** the clamping screw (48) forming a securing device for the screw bolt (25, 46, 46') takes the form of a cap screw, the head (49) of which is adapted for operation by means of a special tool.

10. Connector according to claim 9, **characterized in that** a star-shaped polygonal seat (50) is let into the head of the clamping screw (48).

## Revendications

1. Élément de jonction (15) entre l'ancre (14) et la chaîne (12) de bateaux, en particulier des voiliers et des yachts, comprenant un composant de raccordement d'ancre (16) et un composant de raccordement de chaîne (17), le composant de raccordement d'ancre (16) présentant à une extrémité une fourche de logement (21) pour l'ancre (14), et le composant de raccordement de chaîne (17) présentant à une extrémité une partie fourchue (41) pour recevoir un maillon de chaîne (43) et les branches (23, 24) des fourches de logement (21) et également les branches de la partie fourchue (41) étant traversée respectivement par un boulon fileté (25, 46) qui est fixé à une extrémité, par sa tête, dans une branche (23,44) et, par sa tige filetée (28,47), sur l'autre branche (24, 45), et est susceptible d'être assuré en cas de besoin à l'aide d'une vis de serrage (48), le composant de raccordement d'ancre (16) et le composant de raccordement de chaîne (17) étant reliés ensemble à chaque autre extrémité par le fait qu'un premier composant présente une tête sphérique (38) et l'autre composant présente un logement sphérique (34) avec une ouverture (37) débouchant dans la fourche de logement (21),
**caractérisé en ce que**
le logement sphérique (34) présente un tronçon de sphère creuse (33) s'écartant de la fourche de logement (21), pour la fixation de la tête sphérique (38) en cas de sollicitation en traction, et la tête sphérique (38) présente une face frontale (39) tournée vers la fourche de logement (21), en retrait derrière la forme sphérique, formant, conjointement avec une cavité (29) cylindrique venant du tronçon de sphère creuse (33), orientée vers la fourche de logement (21), une chambre de pompage (22).

2. Élément de jonction selon la revendication 1, **caractérisé en ce que** la tête sphérique (38) fait partie du composant de raccordement de chaîne (17) et le logement sphérique (34) fait partie du composant de raccordement d'ancre (16).

3. Élément de jonction selon la revendication 1 ou 2, **caractérisé en ce que** la tête sphérique (38) présente, sur la face opposée à sa partie fourchue (41) une face frontale (39) plane, s'étendant transversalement par rapport à la direction longitudinale du composant de raccordement de chaîne (17), face frontale circonscrite par un angle obtus partant du centre de sphère (M), dont la valeur est de 180° moins l'angle de pivotement (α) maximal possible du composant de raccordement de chaîne (17).

4. Élément de jonction selon l'une des revendications précédentes, **caractérisé en ce que** la profondeur de la chambre cylindrique (29) formant la chambre de pompage (22) est un peu supérieure à l'espacement, entre la zone de bordure, en position prépivotée au maximum, de la face frontale (39) de la tête sphérique (38) et le centre de sphère (M), lors du pivotement de la tête sphérique (38) de la valeur de la moitié de l'angle de pivotement (α/2).

5. Élément de jonction selon l'une des revendications précédentes, **caractérisé en ce qu'**un téton d'appui (54), faisant saillie au maximum jusqu'à atteindre le cercle de complément en sphère (55), sort de la face frontale (39) de la tête sphérique (38).

6. Élément de jonction selon la revendication 5, **caractérisé en ce que** le téton d'appui (54) est réalisé sous la forme de cône (56) à pointe arrondie.

7. Élément de jonction selon la revendication 5, **caractérisé en ce que** le téton d'appui (54) est configuré sous la forme d'une cloche (57) posée sur la face frontale (39) de la tête sphérique (38).

8. Élément de jonction selon la revendication 5, **caractérisé en ce que** le téton d'appui (54) est formé par un appendice cylindrique (58) dont le dôme est configuré en calotte sphérique (59).

9. Élément de jonction selon l'une des revendications précédentes, **caractérisé en ce que** la vis de serrage (48), formant une sécurité pour le boulon fileté (25, 45, 46'), est réalisée en vis à tête, dont la tête (49) est agencée pour l'actionnement avec un outil spécial.

10. Élément de jonction selon la revendication 9, **caractérisé en ce qu'**un logement polygonal (50) en forme d'étoile est creusé dans la tête de la vis de serrage (48).
